# EUROPÄISCHE PATENTSCHRIFT

(11) **EP 2 705 592 B1**
(45) Veröffentlichungstag und Bekanntmachung des Hinweises auf die Patenterteilung: **08.04.2015**
(21) Anmeldenummer: 12703755.4
(22) Anmeldetag: 02.02.2012
(51) Int. Cl.: F28F 13/08, F28F 13/06, H02K 5/20, F28D 7/02, F28D 21/00

(54) **KÜHLMANTEL UND UMLENKEINHEIT FÜR KÜHLMÄNTEL**
COOLING JACKET AND DEVIATION UNIT FOR COOLING JACKET
CHEMISE DE REFROIDISSMENET ET PIÈCE DE DÉVIATION POUR CHEMISE DE REFROIDISSEMENT

(30) Priorität: 02.05.2011 DE 102011075045
(43) Veröffentlichungstag der Anmeldung: 12.03.2014
(73) Patentinhaber: Schaeffler Technologies AG & Co. KG, 91074 Herzogenaurach (DE)
(72) Erfinder: FISCHER, Raphael, 91074 Herzogenaurach (DE); VOGLER, Tobias, 91074 Herzogenaurach (DE)
(86) Internationale Anmeldenummer: PCT/EP2012/051792
(87) Internationale Veröffentlichungsnummer: WO 2012/150046

(56) Entgegenhaltungen:
- CN-A- 101 924 414
- DE-A1- 3 136 880
- DE-A1-102005 052 364
- DE-A1-102009 051 881
- DE-U1-202004 018 968
- US-A- 4 159 740
- US-A- 5 939 808
- US-A1- 2005 151 431

## Beschreibung

### Gebiet der Erfindung

Die Erfindung betrifft eine Umlenkeinheit zur Richtungsänderung eines Kühlmittelflusses, die beispielsweise angewendet wird in einem Kühlmantel zur Kühlung eines Elektromotors, insbesondere eines Stators, wobei die Abwärme des Elektromotors durch in einer ersten Leitung fließendes Kühlmittel aufgenommen und abtransportiert wird. Der Kühlmantel bildet zumindest teilweise eine erste wendelartige Leitung zum Transport eines Kühlmittels aus. Damit betrifft die Erfindung eine Umlenkeinheit, die einen hohen Freiheitsgrad der Leitungsführung erlaubt.

### Stand der Technik

### Hintergrund der Erfindung

Die DE 20 2004 018968 U1 beschreibt einen Wärmetauscher, in dem sich ein serpentinenartig verlaufender Wasserkanal befindet, wobei in Umlenkzonen des Wasserkanals Leitelemente zur Strömungslenkung angeordnet sind.

Die US 4,159,740 beschreibt ein Gerät zur Kühlung, in dem die Strömung eines flüssigen Kühlmittels durch strömungsführende Elemente im Strömungskanal beeinflusst wird.

Aus DE 10 2005 052 364 A1 ist ein Elektromotor bekannt, an dessen Stator eine wendelartige Leitungen zum Transport eines Kühlmittels ausgebildet ist. Die Kühlmittelleitungen werden durch ein Gehäuse und an dessen Außenseite parallel zur Längsachse des Elektromotors spiralförmig verlaufenden Vorsprung, als auch durch einen becherförmigem Deckel ausgebildet. Der Zufluss und der Auslass der Kühlleitungen sind in den becherförmigen Deckel eingebracht, womit axial beidseitig Verbindungen zur Kühlmittelleitung hergestellt werden müssen.

Daran ist problematisch, dass bei Radnabenmotoren, aber auch bei anderen Elektromotoren, nachteiligerweise radialer Bauraum dadurch verloren geht, dass eine Kühlmittelleitung, beispielsweise in Form eines Schlauches, entweder vom Zufluss oder vom Auslass in axialer Richtung am Elektromotor vorbeigeführt werden muss. Aufgrund dieser eigenen Zuleitungen kann ein verhältnismäßig großer ringförmiger Bauraum nicht für den Elektromotor verwendet werden.

Außerdem ergeben sich keine Alternativen eine solche Zuleitung entweder durch die Spulen des Stators oder näher zur Felge hin anzubringen, weil in beiden Fällen ebenfalls ein großer ringförmiger Bauraum nicht nutzbar wäre, oder aufgrund der Durchführung eine neue Problematik entstünde.

### Aufgabenstellung

### Zusammenfassung der Erfindung

Die Aufgabe der Erfindung ist daher eine Umlenkeinheit zur Richtungsänderung eines Külmittelflusses anzugeben, so dass beispielsweise der Kühlmantel eines Elektromotors in radialer Richtung flach auslegbar ist und dennoch eine gleichmäßige Kühlung des Elektromotors gewährleistet ist.

Die Aufgabe wird durch eine Umlenkeinheit gemäß Anspruch 1 gelöst. Damit kann beispielsweise ein Kühlmantel eines Elektromotors dergestalt ausgeführt werden, dass am Kühlmantel zumindest teilweise eine zweite wendelartige Leitung zum Transport des Kühlmittels ausgebildet ist, und bezogen auf eine gemeinsame Wendelachse beide wendelartigen Leitungen eine axial integrierte Doppelwendel bilden, wobei die erste wendelartige Leitung als Hinflussleitung und die zweite wendelartige Leitung als Rückflussleitung vorgesehen ist.

Ein Kühlmantel ist eine Kühlvorrichtung, die eine möglichst großflächige Kühlung gewährleistet, wobei die Führung der Kühlleitungen derart gestaltet ist, dass Abwärme, insbesondere am Stator, möglichst effektiv aufgenommen wird. Daher bietet sich ein Metall, insbesondere Aluminium für die Fertigung des Kühlmantels an. Der Kühlmantel kann, insbesondere bei Elektromotoren mit Außenläufern, im Wesentlichen zylindrisch, hohlzylindrisch oder als Torussegment oder in einer ähnlichen Weise ausgeführt sein. Ferner ist eine kreisförmige Grundfläche nicht zwingend. Der Kühlmantel kann auch als Prisma mit ganz unterschiedlichen Grundflächen ausgebildet sein, wobei idealerweise die Höhe des Prismas der Rotationsachse des Elektromotors entspricht.

Am Kühlmantel sind die erste und zweite wendelartige Leitung ausgebildet. Dabei bedeutet wendelartig, dass die Leitungen um eine Wendelachse herum angeordnet sind und sich sowohl in Umfangsrichtung, als auch in axialer Richtung entlang der Wendelachse erstrecken, wobei die Wendelachse idealerweise mit der Rotationsachse des Elektromotors zusammenfällt oder dieser sehr nahe liegt. Ein Spezialfall von wendelartig ist schraubenlinienförmig. Hierbei bilden die einzelnen Leitungen eine Schraubenlinienform ab, die auf geometrisch auf einem zylindrischen oder hohlzylindrischen Kühlmantel angeordnet sind und bei einer definierten Schraubensteigung sich in axialer Richtung in Bezug auf die Wendelachse erstrecken, wobei die Wendelachse die Symmetrieachse des Zylinders bzw. Hohlzylinders bildet.

Die wendelartigen Leitungen können hierbei radial offen sein und beispielsweise jeweils eine Nut bilden. Insoweit kann die Ausbildung durch den Kühlmantel nur teilweise sein. Die radiale Begrenzung dieser teilweise gebildeten Leitungen kann durch einen passenden Deckel erzielt werden. Dieser Deckel kann hierbei alternativ radial außen oder radial innen abdecken, je nach dem in welche Richtung die teilweise ausgebildeten Leitungen, bzw. Nuten orientiert sind. Hierzu kann der Deckel die Leitungen wahlweise radial fortbilden und im Anschluss radial abdecken, oder unmittelbar radial abdecken.

Bezogen auf eine gemeinsame Wendelachse bilden beide wendelartigen Leitungen eine axial integrierte Doppelwendel, wobei die erste wendelartige Leitung als Hinflussleitung und die zweite wendelartige Leitung als Rückflussleitung vorgesehen ist. Somit ist einerseits sichergestellt, dass radial immer nur entweder die erste oder die zweite Leitung abdeckt, bzw. die anfallende Wärmeenergie abgreifen kann. Erste und zweite Leitung liegen über die jeweils gebildeten Wendeln axial zueinander orientiert und bilden somit eine Doppelwendel. Zur Bildung dieser Doppelwendel in Bezug zur gemeinsamen Wendelachse weisen beide Leitungen die gleiche Steigung in axialer Richtung auf, um axial ineinander integrierbar zu sein. Dabei kann in unmittelbarer linker und rechter axialer Nachbarschaft der ersten wendelartigen Leitung jeweils ein Teilstück der zweiten wendelartigen Leitung angeordnet sein. Alternativ können dort jedoch auch weitere Kühlleitungen oder andere Elemente untergebracht sein.

Aufgrund des Hin- und Rückflusses in der Doppelwendel bietet die Kühlflüssigkeit im Mittel über zwei axial benachbarte Teilstücke der beiden Leitungen eine in Axialrichtung ausgeglichene Kühlleistung. Dies kann sich, in Abhängigkeit des Einsatzes sehr motorschonend auswirken.

Beispielsweise kann die ausgeglichene Kühlung zur Erhöhung der Anfangstemperatur des Kühlmittels (Temperatur des Kühlmittels) eingesetzt werden. Bei einer Einfachwendel wäre der Unterschied des Temperaturgradienten vom Motor zur Kühlleitung in der Nähe des Einlasses viel größer als beim Auslass. Da es bei der Doppelwendel benachbarte Leitungen mit Kühlmittel von sehr unterschiedlichen Temperaturen gibt, variieren die resultierenden Temperaturgradienten zwischen Kühlmantel und Motor in Axialrichtung viel weniger. Im Wissen, dass grundsätzlich bei möglichst hohem Temperaturgradienten eine Kühlung am besten möglich ist, sollten niedrige Temperaturgradienten vermieden werden. Genau das ist bei einer Doppelwendel der Fall. Die Kühlmitteltemperatur der Hinflussleitung ist deutlich niedriger, als die der Rückflussleitung. Da jedoch beide stets sehr nahe nebeneinander verlaufen werden die jeweiligen Temperaturgradienten zum Motor gemittelt, womit der resultierende Temperaturgradient in Axialrichtung deutlich weniger variiert. Folglich kann die Anfangstemperatur des Kühlmittels vergleichweise hoch sein, womit weniger Kühlleistung bei der Temperierung des Kühlmittels aufgewendet werden muss. Alternativ öder optional kann bei gleichbleibender Anfangstemperatur der Durchflussquerschnitt der Leitungen in der Doppelwendel reduziert werden, womit eine Bauraumersparnis eintritt.

Ferner hat die axial ausgeglichene Kühlung mittels der Doppelwendel noch den Vorteil, das aufgrund der Gleichmäßigkeit nicht mehr alle hitzeanfälligen Stellen innerhalb des Motors aufwändig mittels eines Sensors überwacht werden müssen, sondern gegebenenfalls nur noch einen Sensor erfordern, der durch eine angemessene Kalibrierung auch Aussagen zu anderen Messstellen zulässt.

Ein weiterer Vorteil besteht darin, dass erste und zweite Leitung an einem axialen Ende des Kühlmantels mit einer Umlenkeinheit miteinander verbunden werden, womit sowohl Einlass als auch Auslass des Kühlsystems an einer axialen Seite angeordnet sein können. Dabei besteht wahlweise die Möglichkeit die den Ein/Auslass in radialer oder axialer Richtung münden zu lassen, das heißt mit Hilfe eines Anschlusses oder Steckers in axiale oder radiale Richtung weiterzuleiten. Vorteilhafterweise können beispielsweise mittels eines Doppelschlauchs auch in einem Arbeitsgang beide Anschlüsse mit einem Kühlmittelreservoir, z. B. einem Wassertank, verbunden werden. Insbesondere bei Radnabenmotoren, aber auch bei anderen Elektromotoren ist der radseitige Zugang einer Kühlmittelleitung nicht möglich. Radial ist ein solcher Zugang aufgrund der Felge nicht realisierbar. Daher kann - auf effektive Weise - eine Kühlmittelversorgung axial fahrzeugseitig gewährleistet werden.

Bei einer vorteilhaften Ausführungsform bildet der Kühlmantel eine dritte wendelartige Leitung und eine vierte wendelartige Leitung zusammen mit der ersten und zweiten wendelartigen Leitung eine axial integrierte Vierfachwendel bilden. Mit anderen Worten, es können zwei Doppelwendeln nochmals zu einer Vierfachwendel in dergleichen Art und Weise integriert werden. Eine Mehrfachwendel ist somit immer aus Doppelwendeln gebildet. Dies ist sinnvoll, wenn beispielsweise autarke Kühlsysteme mit unterschiedlichen Leitungen, Pumpen und Kühlmittelreservoirs notwendig sind.

Vorteilhafterweise ist auch ein Kühlmantel mit einer ersten, zweiten, dritten und vierten Leitung in radialer Richtung durch einen Deckel abdeckbar.

Am Kühlmantel sind beispielsweise an der zweiten, axialen Seite des Kühlmantels ein Zufluss der ersten wendelartigen Leitung und auch ein Abfluss der zweiten wendelartigen Leitung angeordnet, womit für den Kühlkreislauf eine Doppelwendel vorteilhaft eingesetzt werden kann. Die zweite axiale Seite des Kühlmantels sollte hierbei die Seite sein, die für Kühlschläuche oder Rohre gut zugänglich ist. Bei einem Radnabenmotor wäre die zweite axiale Seite, die dem Fahrzeug zugewandte Seite und die erste axiale Seite diejenige, die von der Felge abgedeckt wird.

Bei einer vorteilhaften Ausführungsform sind die erste mit der zweiten wendelartigen Leitung und die dritte mit der vierten wendelartigen Leitung an einer ersten, axialen Seite des Kühlmantels mittels einer das Kühlmittel leitenden Umlenkeinheit verbunden. Dadurch kann entweder an der zweiten, axialen Seite die zweite wendelartige Leitung mit der dritten wendelartigen Leitung verbunden werden (nur ein Kreislauf) oder nicht (zwei Kreisläufe).

Eine Doppelwendel aus zwei wendelartigen Leitungen kann vorteilhafterweise eine Umlenkeinheit zur Richtungsänderung des Kühlmittelflusses aufweisen, die vorteilhafterweise einen Kühlmitteleinlass, einen Kühlmittelauslass und ein Mehrleitungssystem mit wenigstens einem Schaufelelement zur Separierung des Kühlmittelflusses in wenigstens zwei Teilströme und anschließender Zusammenführung der Teilströme umfasst. Die Umlenkeinheit wird sowohl an die erste, als auch die zweite wendelartige Leitung angeschlossen, womit der Kühlmittelfluss von der ersten in die zweite Leitung (oder umgekehrt) umgelenkt wird. Dabei können die jeweiligen Flussrichtungen im Wesentlichen oder genau eine 180 Grad Umkehr ausbilden. Ebenfalls sind Umlenkungen von zwischen 90 bis 180 Grad denkbar. Dabei werden die scharfen Umlenkungen von 160 bis 180 Grad deshalb bevorzugt, weil sie - unabhängig von der Geometrie des zu kühlenden Elektromotors bzw. Stators - meist zur größten Bauraumersparnis führen.

Eine Vielzahl kaskadierter Schaufelelemente bilden mittels Schaufelarmen einen Teilstrom aus, der zwischen zwei Schaufelelementen geführt und umgelenkt wird. Es findet also keine Umlenkung des Gesamtstromes im Ganzen statt, sondern einzelne Umlenkungen vieler, meist aller, Teilströme statt. Je größer die Richtungsänderung eines Teilstromes sein soll, desto größer muss der Durchflussquerschnitt ausgelegt werden. Zwischen einem Schaufelrücken und einem Schaufelboden benachbarter Schaufelelemente ist der Durchflussquerschnitt des jeweiligen Teilstromes am größten. Diese Stelle kann in Bezug auf die gesamte Leitungsführung als Scheitel- oder Wendepunkt angesehen werden.

An diesem Scheitel- bzw. Wendepunkt ist die Fliessgeschwindigkeit des Kühlmittels am langsamsten, weil der Gesamtdurchflussquerschnitt der Teilströme um ein Vielfaches größer ist, als der Durchflussquerschnitt des Kühlmitteleinlasses bzw. Auslasses. Gemäß dem Bernoullischen Gesetz, nachdem die Summe des statischen Drucks und des dynamischen Drucks konstant ist, würde bei gleichbleibendem Durchflussquerschnitt und einer Umlenkung in entgegengesetzter Richtung (180 Grad) ein starker Anstieg des dynamischen Drucks und ein damit unvermeidbarer Abfall des statischen Drucks, der zum Betrieb des Kühlmittelkreislaufs möglichst an allen Stellen gleichmäßig hoch gehalten werden sollte, einhergehen. Daher stellt eine Umlenkung in Gegenrichtung bei gleichbleibendem Durchflussquerschnitt eine Verstopfungs- oder Infarktähnliche Situation dar, die mit der teilstrombasierten Umlenkeinheit vermeidbar ist, weil die Fliessgeschwindigkeit der Teilströme umgekehrt proportional zur Vergrößerung des Gesamtdurchflussquerschnittes reduziert ist.

Ein Durchflussquerschnitt ist die Schnittfläche einer Kühlmittelleitung oder eines Teilstromes, auf der die Fließrichtung der jeweiligen Kühlmitteleitung, beziehungsweise Teilstromes senkrecht steht. Der Gesamtdurchflussquerschnitt ist die Summe der Durchflussquerschnitte mehrerer Teilströme an miteinander korrespondierenden Stellen.

Vorteilhafterweise sind jeweils die größten Durchflussquerschnitte der Teilströme größer als der zweifache, dreifache, vierfache oder fünffache Durchflussquerschnitt des Kühlmitteleinlasses oder des Kühlmittelauslasses der Umlenkeinheit, womit auch der Bauraum optimal genutzt werden kann.

Vorteilhafterweise ist die mittlere Fliessgeschwindigkeit am größten Durchflussquerschnitt eines Teilstromes zweimal, dreimal, viermal oder fünfmal so langsam, wie die Flussgeschwindigkeit am Durchflussquerschnitt des Kühlmitteleinlasses oder Kühlmittelauslasses. Durch die Ausbildung mehrerer Teilströme mit einer entsprechenden Anzahl von Schaufelelementen kann die Fliessgeschwindigkeit beliebig reduziert werden, sodass eine Kontrolle, insbesondere eine Verringerung des Kühlmittelflusses mittels des statischen Drucks (Kühlmittelpumpe) gewährleistet ist.

Bei einer vorteilhaften Ausführungsform trennt ein Schaufelelement den Teilstrom am Schaufelboden des Schaufelelementes von einem Nachbarteilstrom am Schaufelrücken des Schaufelelementes. Das Schaufelelement weist jeweils in Flussrichtung und ihn Gegenflussrichtung einen sich verjüngenden Schaufelarm auf. Der Abstand der Schaufelarme legt die Abtrennung des Teilstromes vom Hauptstrom fest (z.B. 10, 20 oder 30 Prozent des Hauptstromes).

Vorteilhafterweise ist die Umlenkeinheit als geschlossener Ring, als Ringssegment und/oder als Spritzgußteil ausgeführt. Der geschlossene Ring erleichtert die radiale Positionierung und kann mit entsprechenden Eingriffselementen auch axial korrekt positioniert werden. Entsprechendes gilt für das Ringsegment. Die Ausbildung als Spritzgussteil ist im Vergleich zu einer spanenden Bearbeitung kostengünstig.

Vorteilhaft ist auch, wenn die Geometrie der Umlenkeinheit einen winkelrichtigen Einbau am Kühlmantel erzwingt. Damit kann sichergestellt werden, dass die erste und zweite bzw. dritte und vierte wendelartige Leitung ohne nachteiliges Leck miteinander verbunden sind, oder gar derart falsch angeschlossen werden, dass keine fließende Verbindung gewährleistet ist. Damit wäre die Kühlung nicht funktionstüchtig.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispielen näher beschrieben und erläutert.

Es zeigen:
- Fig. 1: einen hohlzylindrischen Kühlmantel mit einer ausschnittsweise vergrößerten, ringförmigen Umlenkeinheit,
- Fig. 2: einen Längsschnitt zur Rotationsachse der Kühlanordnung, bestehend aus Kühlmantel, Umlenkeinheit und Deckel,
- Fig. 3: eine zur Umlenkeinheit gegenüberliegende Seite des Kühlmantels aus Fig. 1,
- Fig. 4: eine Schnittdarstellung des Mehrleitungssystems der Umlenkeinheit in Umfangsrichtung, und
- Fig. 5: benachbarte Schaufelelemente des Mehrstromsystems aus Fig.4.

### Ausführungsbeispiel

### Beschreibung der Zeichnungen

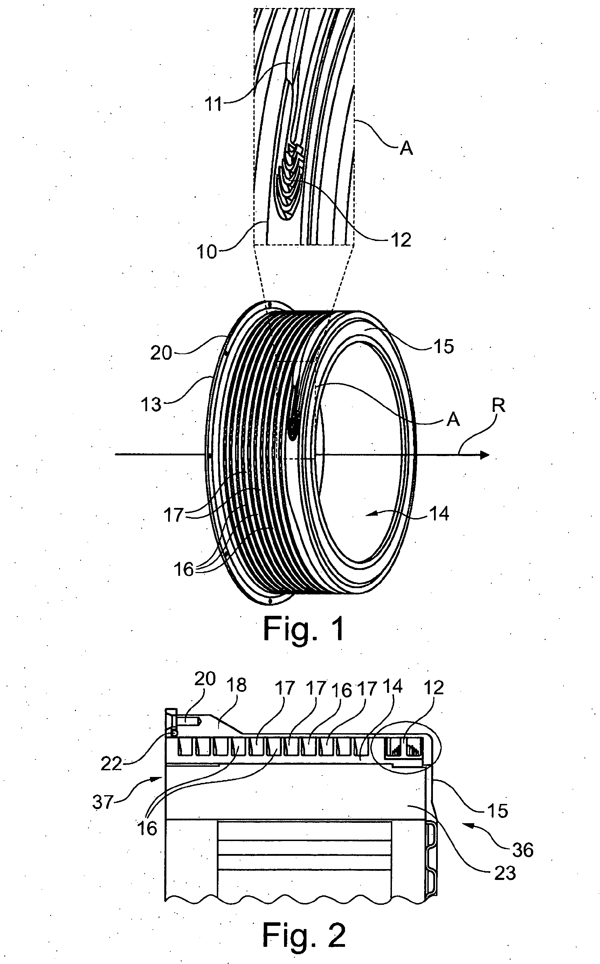

Fig. 1 zeigt einen hohlzylindrischen Kühlmantel 14 mit einer in einem Ausschnitt A vergrößerten, ringförmigen Umlenkeinheit 12.

Die Umlenkeinheit 12 ist als Ring ausgebildet und verbindet die diametral gegenüberliegenden Öffnungen der ersten und zweiten Leitung 16,17. Damit ist die Umlenkeinheit an der ersten axialen Seite bezogen auf die Rotationssachse R des (nicht abgebildeten) Motors, die mit der Wendelachse zusammenfällt, angeordnet und vermeidet zusätzliche Anschlüsse auf der ersten axialen Seite.

Die wendelförmigen, als Nuten ausgeführte, Leitungen 16 und 17 bilden Schraubenlinien am hohlzylindrischen Kühlmantel 14 aus und sind radial nach außen offen. Der Radialflansch 13 dient zur Anlage und Befestigung eines Deckel 18 (siehe Fig. 2)

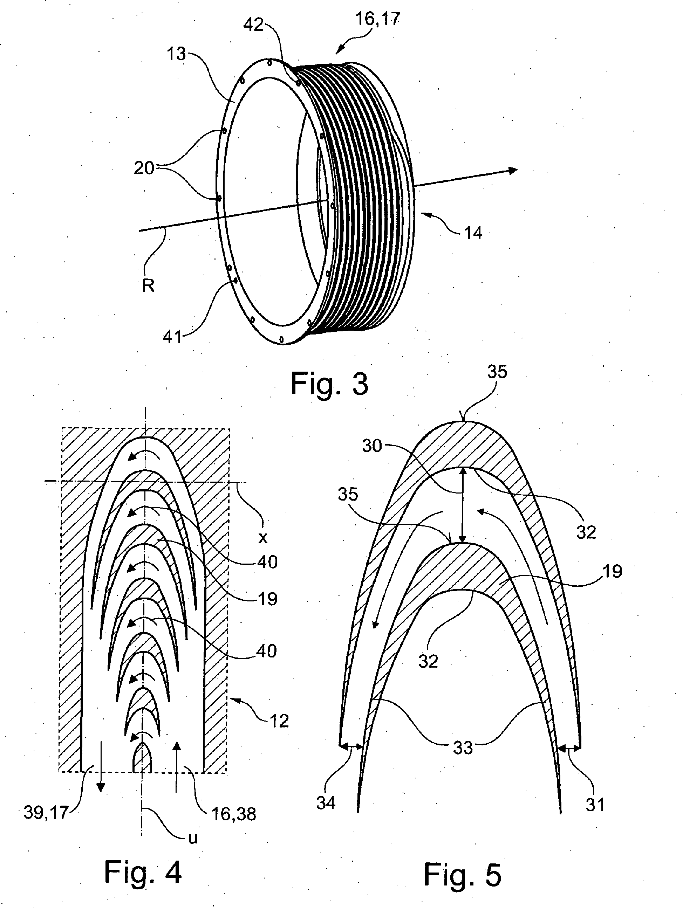

Fig. 2 und Fig. 3 zeigten einen Längsschnitt zur Rotationsachse der Kühlanordnung, bestehend aus Kühlmantel 14, Umlenkeinheit 12 und Deckel 18.

Der Deckel 18 ist mittels wenigstens einer (nicht abgebildeten) Schraube und einer Bohrung 20 am Ringflansch 13 befestigt und schließt damit das Kühlsystem radial ab. Die Anzahl der Schrauben kann je nach erforderlicher Halte- bzw. Dichtkraft variiert werden. Dieses hat nunmehr nur noch fahrzeugseitig (zweite axiale Seite) einen Zufluss 41 und einen Abfluss 42 am Radialflansch 13 und kann allein von dieser Seite angeschlossen werden, was Bauraum einspart. Ferner führt die axial abwechselnd angeordnete erste und zweite Leitung zu einer gleichmäßigen Wärmeabfuhr.

Der Stator 23 wird großflächig vom Kühlmantel 14 gekühlt, wobei dieser dank des ringförmigen Mantelbodens 15 leicht auf dem Stator 23 installierbar ist. Ferner wird auch die Umlenkeinheit 12 vom Deckel 18 axial gegen den Kühlmantel 14 gedrückt und damit fixiert. Da das Kühlsystem mit einem Kühlmittel beaufschlagt wird ist ein Dichtungsring 22 zwischen Deckel 18 und Kühlmantel 14 sinnvoll. Auch an anderen Stellen kann ein Dichtring angeordnet werden, wie beispielsweise auf der ersten axialen Seite in der Nähe der Umlenkeinheit 12, zwischen dem Deckel 18 und dem Kühlmantel 14 oder auch zwischen dem ringförmigen Mantelboden 15 und dem Kühlmantel 14, wobei der Mantelboden 15 mit dem Deckel 18 einstückig ausgeführt werden kann.

Es werden eine zur Umlenkeinheit 12 gegenüberliegende Seite des Kühlmantels 14 aus Fig. 1 und die Leitung, die von der diametral gegenüberliegenden Öffnung zur Umlenkungseinheit 12 führt, gezeigt.

Vorteilhafterweise bilden die erste und/oder zweite Leitung eine Riffelung oder Aufrauung auf, die eine turbulente Strömung (im Gegensatz zu einer laminaren) hervorruft und eine bessere Umverteilung des Kühlmittels und damit auch der aufgenommenen Energie sicherstellt. Alternativ kann auch eine Rotation des Kühlmittels (meist ein Fluid) um eine Strömungslängsachse hervorgerufen werden, z.B. durch eine schraubenartige Ausbildung innerhalb der Leitung.

Es ist weiterhin vorteilhaft einen Einlass oder Auslass mittels eines Sackloches umzusetzen, wobei am Kühlmantel 14 in radialer Richtung ein spanabhebendes Werkzeug radial zugeführt oder abgeführt wird. Damit wird die Leitung in Umfangsrichtung unterbrochen, um sie mittels einer Axialbohrung axial zugänglich zu machen.

Alternativ kann ein Ein- oder Auslass auch eine auslaufende Nut umgesetzt werden, bei der die auch die Öffnung über einen weiten Teil des Umfangs verläuft und nicht notwendigerweise eine runde Form ausweist.

Fig. 4 zeigt eine Schnittdarstellung des Mehrleitungssystems der Umlenkeinheit 12 aus Fig. 1 in Umfangsrichtung. Die Schaufelelemente 19 sind kaskadiert angeordnet und teilen den Gesamtstrom in mehrere langsam fließende Teilströme 40 auf. Im Vergleich zum Einlass 38, der mit Leitung 16 verbunden ist, weisen die Teilströme einen Durchflussgesamtquerschnitt auf, der ca. viermal größer ist als der Durchflussquerschnitt des Einlasses 38. Entsprechendes gilt in Bezug auf den Durchflussquerschnitt des Auslasses 39.

Die Schaufelelemente 19 sind in Umfangsrichtung U angeordnet und leiten die Kühlflüssigkeit entlang des Umfangs in die entgegengesetzte Richtung um.

Fig. 5 zeigt benachbarte Schaufelelemente 19 des Mehrleitungssystems aus Fig.4. Die Schaufelarme 33 bilden jeweils paarweise einen Schaufeleinlass 31 und einen Schaufelauslass 34, womit die Größe des Teilstromes 40 festgelegt wird. Der größte Durchflussquerschnitt 30 ist zwischen einem Schaufelboden 32 und einem benachbarten Schaufelrücken 35 angeordnet. In diesem Ausführungsbeispiel ist der größte Durchflussquerschnitt 30 entlang der Umfangsrichtung U orientiert.

Entsprechen tritt entlang der Strömungsrichtung entlang der Schaufelarme 33 eine Volumenerweiterung statt, die beim größten Durchflussquerschnitt am größten ist, und vermindert sich nach diesem wieder entsprechend.

Zusammenfassend betrifft die Erfindung einen Kühlmantel 14 zur Kühlung eines Elektromotors, insbesondere eines Stators 23, wobei am Kühlmantel 14 zumindest teilweise eine erste wendelartige Leitung 16 zum Transport eines Kühlmittels ausgebildet ist. Es soll eine bauraumoptimierte Kühlung aufgezeigt werden, die eine axial ausgeglichene Kühlung gewährleistet, indem am Kühlmantel 14 zumindest teilweise eine zweite wendelartige Leitung 17 zum Transport des Kühlmittels ausgebildet ist, und bezogen auf eine gemeinsame Wendelachse R beide wendelartigen Leitungen 16,17 eine axial integrierte Doppelwendel bilden, wobei die erste wendelartige Leitung 16 als Hinflussleitung und die zweite wendelartige Leitung 17 als Rückflussleitung vorgesehen ist. Ferner wird eine Umlenkeinheit 12 für die Rückführung in die zweite Leitung 17 angegeben, die einen Abfall des statischen Drucks größtenteils verhindert.

**Bezugszeichenliste**

| | | | |
|---|---|---|---|
| 10 | Anschlag | 11 | Leitungsübergang |
| 12 | Umlenkeinheit | 13 | Radialflansch |
| 14 | Kühlmantel | 15 | ringförmiger Mantelboden |
| 16 | erste Leitung | 17 | zweite Leitung |
| 18 | Deckel | 19 | Schaufelelement |
| 20 | Bohrungen | | |
| 22 | Dichtungsring | 23 | Stator |
| 30 | Schaufeldurchlass | 31 | Schaufeleinlass |
| 32 | Schaufelboden | 33 | Schaufelarme |
| 34 | Schaufelauslass | 35 | Schaufelrücken |
| 36 | erste axiale Seite | 37 | zweite axiale Seite |
| 38 | Einlass | 39 | Auslass |
| 40 | Teilstrom | 41 | Zufluss |
| 42 | Abfluss | R | Wendelachse |
| A | Ausschnitt | U | Umfangsrichtung |
| X | Axialrichtung | | |

## Patentansprüche

1. Umlenkeinheit (12) zur Richtungsänderung eines Kühlmittelflusses mit einem Kühlmitteleinlass (38) einem Kühlmittelauslass (39) und einem Mehrleitungssystem mit wenigstens einem Schaufelelement (19) zur Separierung des Kühlmittelflusses in wenigstens zwei Teilströme (40) und anschließender Zusammenführung der Teilströme (40), **dadurch gekennzeichnet, dass**
das Schaufelelement (19) durch zwei Schaufelarme (33) und einen diese verbindenden Schaufelboden (32) eine Schaufelform ausbildet und eine Summe von jeweils größten Durchflussquerschnitten (30) der Teilströme (40) am Schaufelboden größer ist als der zweifache, dreifache, vierfache oder fünffache Durchflussquerschnitte des Kühlmitteleinlasses (38) oder des Kühlmittelauslasses (39).

2. Umlenkeinheit nach Anspruch 1, wobei die mittlere Flussgeschwindigkeit am größten Durchflussquerschnitt (30) eines Teilstromes (40) zweimal, dreimal, viermal oder fünfmal so langsam ist wie die Flussgeschwindigkeit am Durchflussquerschnitt des Kühlmitteleinlasses (38) oder Kühlmittelauslasses (39).

3. Umlenkeinheit (12) nach Anspruch 1 oder 2, wobei ein Schaufelelement (19) den Teilstrom (40) am Schaufelboden (32) von einem Nachbarteilstrom an einem Schaufelrücken (35) des Schaufelelementes (19) trennt, wobei der Schaufelrücken (35) zum Schaufelboden (32) korrespondierend auf der an der Schaufelform außenliegenden Seite angeordnet ist, und die Schaufelarme (33) jeweils eine sich in Flussrichtung und ihn Gegenflussrichtung verjüngende Form aufweisen.

4. Umlenkeinheit (12) nach einem der Ansprüche 1 bis 3, wobei die Umlenkeinheit (12) als geschlossener Ring, als Ringsegment und/oder als Spritzgußteil ausgeführt ist.

## Claims

1. Deflection unit (12) for changing the direction of a coolant flow, comprising a coolant inlet (38), a coolant outlet (39) and a multiple line system comprising at least one blade element (19) for separating the coolant flow into at least two partial flows (40) and subsequently combining the partial flows (40), **characterized in that** the blade element (19) forms a blade shape by means of two blade arms (33) and a blade base (32) which connects the said blade arms, and a sum of the respectively largest throughflow cross sections (30) of the partial flows (40) at the blade base is larger than two times, three times, four times or five times the throughflow cross sections of the coolant inlet (38) or of the coolant outlet (39).

2. Deflection unit according to Claim 1, wherein the average flow rate across the largest throughflow cross section (30) of a partial flow (40) is two times, three times, four times or five times as slow as the flow rate across the throughflow cross section of the coolant inlet (38) or coolant outlet (39).

3. Deflection unit (12) according to Claim 1 or 2, wherein a blade element (19) separates the partial flow (40) at the blade base (32) from an adjacent partial flow at a blade rear area (35) of the blade element (19), wherein the blade rear area (35) is arranged on that side which is situated on the outside of the blade shape, so as to correspond to the blade base (32), and the blade arms (33) respectively have a shape which tapers in the flow direction and in the opposite flow direction.

4. Deflection unit (12) according to one of Claims 1 to 3, wherein the deflection unit (12) is designed as a closed ring, as a ring segment and/or as an injection-molded part.

## Revendications

1. Unité de déviation (12) pour modifier la direction d'un flux de réfrigérant, comprenant une entrée de réfrigérant (38), une sortie de réfrigérant (39) et un système de conduites multiples pourvu d'au moins un élément de pale (19) pour séparer le flux de réfrigérant en au moins deux flux partiels (40) et pour réunir ensuite les flux partiels (40), **caractérisée en ce que**
l'élément de pale (19) réalise une forme de pale au moyen de deux bras de pale (33) et d'une base de pale (32) reliant ceux-ci, et une somme de sections transversales d'écoulement les plus grandes (30) respectives des flux partiels (40) au niveau de la base de pale étant supérieure à deux fois, à trois fois, à quatre fois ou à cinq fois les sections transversales d'écoulement de l'entrée de réfrigérant (38) ou de la sortie de réfrigérant (39).

2. Unité de déviation selon la revendication 1, dans laquelle la vitesse moyenne de flux au niveau de la section transversale d'écoulement la plus grande (30) d'un flux partiel (40) est deux fois, trois fois, quatre fois ou cinq fois plus lente que la vitesse de flux au niveau de la section transversale d'écoulement de l'entrée de réfrigérant (38) ou de la sortie de réfrigérant (39).

3. Unité de déviation (12) selon la revendication 1 ou 2, un élément de pale (19) séparant le flux partiel (40) au niveau de la base de pale (32) d'un flux partiel adjacent au niveau d'un dos de pale (35) de l'élément de pale (19), le dos de pale (35) étant disposé sur le côté situé à l'extérieur de la forme de pale, de manière correspondante à la base de pale (32), et les bras de pale (33) comprenant respectivement une forme se rétrécissant dans la direction du flux et dans la direction opposée au flux.

4. Unité de déviation (12) selon l'une quelconque des revendications 1 à 3, l'unité de déviation (12) étant réalisée sous forme d'anneau fermé, sous forme de segment annulaire et/ou sous forme de pièce moulée par injection.
